# EUROPEAN PATENT SPECIFICATION

(11) **EP 2 779 723 B1**
(45) Date of publication and mention of the grant of the patent: **28.02.2018**
(21) Application number: 13794786.7
(22) Date of filing: 07.08.2013
(51) Int. Cl.: H04W 12/04, H04W 84/12, H04W 12/08

(54) **METHOD AND RELATED DEVICE FOR ACCESSING ACCESS POINT**
VERFAHREN UND ENTSPRECHENDE VORRICHTUNG ZUM ZUGRIFF AUF EINEN ZUGANGSPUNKT
PROCÉDÉ ET DISPOSITIF ASSOCIÉ POUR ACCÉDER À UN POINT D'ACCÈS

(30) Priority: 29.01.2013 CN 201310034152
(43) Date of publication of application: 17.09.2014
(73) Proprietor: Huawei Device Co., Ltd., Shenzhen, Guangdong 518129 (CN)
(72) Inventor: XU, Tianliang, Shenzhen Guangdong 518129 (CN)
(74) Representative: Gill Jennings & Every LLP
(86) International application number: PCT/CN2013/080964
(87) International publication number: WO 2014/117493

(56) References cited:
- EP-A1- 2 693 689
- WO-A1-2011/128725
- CN-A- 101 431 752
- CN-A- 102 724 668
- CN-A- 102 724 668
- CN-U- 202 665 403
- US-A1- 2006 208 088
- US-A1- 2011 150 266
- Sameed: "Connect To WiFi Networks By Scanning QR Codes With Barcode Scanner [Android]", addictivetips, 24 August 2011 (2011-08-24), XP055037639, Retrieved from the Internet: URL:http://www.addictivetips.com/mobile/co nnect-to-wifi-networks-by-scanning-qr-code s-with-barcode-scanner-android/ [retrieved on 2012-09-10]

## Description

### TECHNICAL FIELD

This application relates to the field of communications technologies, and in particular to a method and a related device for accessing an access point.

### BACKGROUND

Currently, as wireless local area network (Wireless Local Area Network, WLAN) services are being promoted by operators, access points (Access Point, AP) using the Wireless Fidelity (Wireless Fidelity, WiFi) technology are deployed in more and more regions; specifically, an AP broadcasts a service set identifier (Service Set Identifier, SSID) provided by an operator of the AP in an open manner; upon detecting the SSID, a user terminal associates with the AP identified by the SSID if the user terminal decides to access the SSID and enters a correct password to ensure access to the AP. After accessing the AP, the user terminal can implement a related network application service.

Generally speaking, the user terminal needs to be connected to a peripheral such as a keyboard to enter a password to associate with the AP; however, in situations in which a micro user terminal has no peripheral such as a keyboard, the user cannot enter an access password and therefore cannot connect to the AP. In addition, in situations in which an access password is very long or an SSID is very long, the access password or SSID may be entered incorrectly, increasing difficulty in identification and lowering the efficiency in accessing the AP. Moreover, an administrator is required to provide an access password, and the user terminal is required to enter the access password to access the AP. If there is any vulnerability in user identity authentication or there is a password leak, which may easily occur because a password is generally in a form of letters or numbers, a system breaks down due to an attack by an unauthorized user.

Currently, a user terminal may also access a WiFi AP in a manner stipulated by a standard of Wi-Fi protected setup (Wi-Fi Protected Setup, WPS), in which case the user needs to click a WPS button of the Wi-Fi AP for a long time. Within the time when a WPS button of the user terminal is clicked, if the WPS button of the Wi-Fi AP is also in a clicked state, the user terminal may access the Wi-Fi AP to conduct a related network application service. The WPS button of the user terminal and the WPS button of the Wi-Fi AP must be synchronized in order to establish a connection, where the operation is complex and impractical; in addition, a successful connection supports only a current service application, and cannot be used again once the current service is disconnected, making a connection operation more cumbersome.

US2006/0208088A1 discloses a communication system including a first communication apparatus; and a second communication apparatus, wherein the first communication apparatus and the second communication apparatus communicate with each other by wireless. The first communication apparatus includes a first storage device for storing configuration information for rejecting unauthorized connection and for connecting only an authorized party, an encoding device for encoding the stored configuration information into two-dimensional codes, and a display control device for controlling display of the two-dimensional codes. The second communication apparatus includes an image-capture control device for controlling image capture of the displayed two-dimensional codes, a decoding device for decoding the image-captured two-dimensional codes into the configuration information, and a second storage device for storing the decoded configuration information.

US2011/0150266A1 discloses embodiments of techniques and systems for automated security setup. A camera associated with a computing device may be used to capture an image of a multi-dimensional code, such as a QR code. The multi-dimensional code may contain information used to set up security or networking on the computing device. For example, the code may contain information used to connect the computing device to a wireless network, or a security certificate to facilitate secure internetworking. After the image is captured, a security setup application may decode the information contained in the code and use it to control security and networking on the computing device by manipulating APIs on the computing device. This prevents improper connections and/or mistakes in entering long, difficult pieces of security information. Other embodiments may be described and claimed.

Sameed "Connect to WiFi Networks By Scanning QR Codes With Barcode Scanner" discloses an Android app that allows you to create QR codes for WiFi access points and share them with your friends, colleagues or customers so that they may simply scan these codes to connect to affiliated networks - eliminating the need to share long access keys.

CN102724668A discloses a method and a system for sharing WIFI (wireless fidelity) network information on the basis of two-dimensional code graphs. The method includes that WIFI network information providing equipment accesses into the WIFI network, acquires access point information of the accessed WIFI network and converts the access point information into a two-dimensional code graph; WIFI network information receiving equipment acquires the two-dimensional code graph and analyzes the same to acquire the access point information and is connected to the WIFI network according to the access point information. By the method for sharing the WIFI network information on the basis of the two-dimensional code graphs, sharing efficiency of the WIFI network information is improved, and other users cannot acquire the network type, passwords and the like of the access point when seeing the two-dimensional code graph, and accordingly, access safety of the WIFI network is improved as well.

### SUMMARY

Embodiments of the present application provide a method and a related device for accessing an access point, which solves a problem that a current method for accessing an access point is operationally complex and provides low security performance.

In a first aspect, an embodiment of the present application provides a method for accessing an access point, comprising:
acquiring, by a user terminal, a two-dimension code by;
   a) acquiring, by the user terminal in a scanning manner, the two-dimension code, comprising:
      sending, by the user terminal, a scanning request to the access point, so that the access point generates a two-dimension code and displays the two-dimension code on a screen; and
      scanning, by the user terminal, the screen to acquire the two-dimension code; or,
   b) acquiring, by the user terminal, an image carrying a two-dimension code, comprising:
      sending, by the user terminal, a first request to the access point, so that the access point generates an image carrying a two-dimension code, wherein the first request is configured to request an image carrying a two-dimension code;
      receiving, by the user terminal, first information sent by the access point, wherein the first information comprises the image carrying the two-dimension code; and
      parsing, by the user terminal, the image carrying the two-dimension code to acquire the two-dimension code;
parsing, by the user terminal, the two-dimension code to obtain information about the two-dimension code, wherein the information about the two-dimension code comprises an access password of the access point and an identifier of the access point; and
accessing, by the user terminal, the access point according to the access password of the access point and the identifier of the access point.

With reference to a first aspect, in a possible implementation manner, after the sending, by the user terminal, a first request to the access point and before the receiving, by the user terminal, first information sent by the access point, the method further includes:
receiving, by the user terminal, payment request information sent by the access point, so that the user makes a payment according to the payment request information, where the payment request information includes a pricing standard and a charging mode and the first information further includes information about duration or traffic in accessing the access point.

With reference to the first aspect, in a possible implementation manner, the scanning, by the user terminal, the screen includes:
scanning, by the user terminal by using a camera, the screen.

With reference to the first aspect, in a possible implementation manner, the information about the two-dimension code further includes information about duration or traffic in accessing the access point.

In a second aspect, an embodiment of the present application provides a method for accessing an access point, the method comprising the steps of:
receiving a scanning request sent by a user terminal,
generating a two-dimension code, and
displaying the two-dimension code on a screen, so that the user terminal scans the screen to acquire the two-dimension code, the user terminal parses the two-dimension code to acquire information about the two-dimension code, wherein the information about the two-dimension code comprises an access password of the access point and an identifier of the access point, and the user terminal accesses the access point according to the access password of the access point and the identifier of the access point; or
the method comprising the steps of:
   receiving a first request sent by the user terminal, wherein the first request is configured to request an image carrying a two-dimension code;
   generating an image carrying the two-dimension code; and
   sending first information to the user terminal, so that the user terminal acquires the first information, wherein the first information comprises the image carrying the two-dimension code; so that the user terminal acquires the image carrying the two-dimension code, the user terminal parses the image carrying the two-dimension code to acquire the two-dimension code, the user terminal parses the two-dimension code to acquire information about the two-dimension code;
wherein the information about the two-dimension code comprises an access password of the access point and an identifier of the access point, and accesses the access point according to the access password of the access point and the identifier of the access point.

The generating of the two-dimension code may include:
generating a two-dimension code according to the identifier of the access point, the access password of the access point, and an encryption manner.

After the receiving a first request sent by the user terminal and before the sending first information to the user terminal, the method may further include:
sending payment request information to the user terminal, so that the user makes a payment according to the payment request information, where the payment request information includes a pricing standard and a charging mode and the first information further includes information about duration or traffic in accessing the access point.

The generating the image carrying the two-dimension code may include:
generating the two-dimension code; and
encapsulating the two-dimension code into an image.

In a third aspect, an embodiment of the present application provides a user terminal, comprising:
an acquiring unit, configured to acquire a two-dimension code wherein:
   a) the acquiring unit is specifically configured to send a scanning request to an access point so that the access point generates a two-dimension code and displays the two-dimension code on a screen, and is configured to scan the screen to acquire the two-dimension code and to acquire the two-dimension code in a scanning manner; or,
   b) the acquiring unit is specifically configured to send a first request to the access point so that the access point generates an image carrying a two-dimension code, wherein the first request is configured to request an image carrying a two-dimension code; the acquiring unit is further configured to receive first information sent by the access point, wherein the first information comprises the image carrying the two-dimension code, and acquire an image carrying a two-dimension code, and is further configured to parse the image carrying the two-dimension code to acquire the two-dimension code; and
a processing unit, configured to parse the two-dimension code to obtain information about the two-dimension code, wherein the information about the two-dimension code comprises an access password of an access point and an identifier of the access point; wherein:
   the processing unit is further configured to access the access point according to the access password of the access point and the identifier of the access point.

With reference to the third aspect, in a possible implementation manner, the acquiring unit is further configured to receive payment request information sent by the access point, so that a user, after making a payment according to the payment request information, receives first information sent by the access point, where the payment request information includes a pricing standard and a charging mode and the first information further includes information about duration or traffic in accessing the access point.

With reference to the fourth aspect, in a possible implementation manner:
the acquiring unit is further configured to scan the screen by using a camera.

With reference to the third aspect, the information about the two-dimension code further includes information about duration or traffic in accessing the access point.

### BRIEF DESCRIPTION OF DRAWINGS

To describe the technical solutions in the embodiments of the present application or in the prior art more clearly, the following briefly introduces the accompanying drawings required for describing the embodiments or in the prior art. Apparently, the accompanying drawings in the following description show merely some embodiments of the present application, and a person of ordinary skill in the art may still derive other drawings from these accompanying drawings without creative efforts.
FIG. 1 is a flowchart of a method for accessing an access point according to an embodiment of the present application;
FIG. 2 is a flowchart of another method for accessing an access point according to an embodiment of the present application;
FIG. 3 is a flowchart of another method for accessing an access point according to an embodiment of the present application;
FIG. 4 is a structural diagram of a user terminal according to an embodiment of the present application;
FIG. 5 is a structural diagram of another user terminal according to an embodiment of the present application;
FIG. 6 is a structural diagram of an access point according to an embodiment of the present application;
FIG. 7 is a structural diagram of another access point according to an embodiment of the present application; and
FIG. 8 is a structural diagram of another access point according to an embodiment of the present application.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present application without creative efforts shall fall within the protection scope of the present application.

The specific embodiments are described in detail as follows:

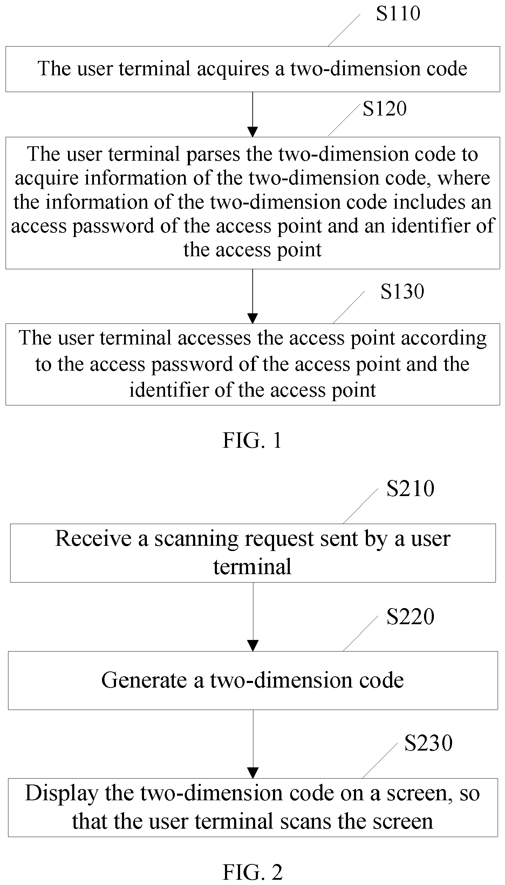

Referring to FIG. 1, FIG. 1 is a flowchart of a method for accessing an access point according to an embodiment of the present application. The method provided in this embodiment for accessing an access point is described based on that a user terminal is an executor; the user terminal is WiFi-enabled and may be a mobile phone, a computer, or a WiFi-enabled terminal without a keyboard. As shown in FIG. 1, the method provided in this embodiment for accessing an access point includes the following steps:
S110. The user terminal acquires a two-dimension code.

In an embodiment, a user terminal may acquire a two-dimension code in a scanning manner. Specifically, the steps may be as follows:
1. The user terminal sends a scanning request to an access point, so that the access point generates a two-dimension code and displays the two-dimension code on a screen; and
2. The user terminal scans the screen to acquire the two-dimension code. Alternatively, the user terminal may use a camera to scan the screen to acquire the two-dimension code.

Alternatively, after generating the two-dimension code, the access point may print and output the two-dimension code and provide a user a paper copy displaying the two-dimension code, so that the user scans the paper copy by using the user terminal to acquire the two-dimension code.

In an embodiment, a manner for acquiring a two-dimension code by a user terminal specifically includes the following steps:
A. The user terminal acquires an image carrying a two-dimension code; and
B. The user terminal parses the image carrying the two-dimension code to acquire the two-dimension code.

In an embodiment, a manner for acquiring an image carrying a two-dimension code by a user terminal specifically includes the following steps:
a. The user terminal sends a first request to an access point, so that the access point generates an image carrying a two-dimension code, where the first request is configured to request an image carrying a two-dimension code; and
b. The user terminal receives first information sent by the access point, where the first information includes the image carrying the two-dimension code.

Alternatively, after the user terminal sends a first request to the access point and before the user terminal receives the first information sent by the access point, the method further includes:

The user terminal receives payment request information sent by the access point, so that the user makes a payment according to the payment request information, where the payment request information includes a pricing standard and a charging mode and the first information further includes information about duration or traffic in accessing the access point.

S120. The user terminal parses the two-dimension code to acquire information about the two-dimension code, where the information about the two-dimension code includes an access password of the access point and an identifier of the access point.

Alternatively, the information about the two-dimension code further includes information about duration or traffic in accessing the access point. When the user has accessed the access point for an accumulated duration longer than the duration restricted in the information about the duration, or when the user, after accessing the access point, has used network traffic higher than the traffic restricted in the information about the traffic, the user automatically disconnects from the access point, or the network between the access point and the user terminal is disconnected by the access point.

S130. The user terminal accesses the access point according to the access password of the access point and the identifier of the access point.

According to the present application, a user terminal acquires a two-dimension code, parses the two-dimension code to acquire information about the two-dimension code, and accesses an access point according to the information about the two-dimension code, namely, an access password of the access point and an identifier of the access point. A two-dimension code is automatically scanned or acquired without a need to use a keyboard to enter a password or synchronously click a WPS button, in which case the operation is convenient and simple and a size of a user terminal is reduced. In addition, occurrence of an error arising from entering a long password is avoided, thereby improving the efficiency in accessing an access point.

Further, an encryption manner based on a two-dimension code is used to prevent a password from being stolen. In addition, a two-dimension code may be generated by an access point, in which case a password leak does not occur easily and a system is prevented from breakdown caused by an attack by an unauthorized user.

Referring to FIG. 2, FIG. 2 is a flowchart of another method for accessing an access point according to an embodiment of the present application. The method provided in this embodiment for accessing an access point is described based on that an access point is an executor; as shown in FIG. 2, the method provided in this embodiment for accessing an access point includes:
S210. Receive a scanning request sent by a user terminal.
S220. Generate a two-dimension code.
S230. Display the two-dimension code on a screen, so that the user terminal scans the screen to acquire the two-dimension code, the user terminal parses the two-dimension code to acquire information about the two-dimension code, where the information about the two-dimension code includes an access password of the access point and an identifier of the access point, and accesses the access point according to the access password of the access point and the identifier of the access point.

Alternatively, after generating the two-dimension code, the access point may print and output the two-dimension code and provide the user a paper copy displaying the two-dimension code, so that the user scans the paper copy by using a user terminal to acquire the two-dimension code.

Alternatively, the generating a two-dimension code by the access point specifically includes the following step:

Generate a two-dimension code according to the identifier of the access point, the access password of the access point, and an encryption manner.

According to this embodiment, an access point receives a scanning request sent by a user terminal, generates a two-dimension code, and displays the two-dimension code on a screen, so that the user terminal scans the screen to acquire the two-dimension code, the user terminal parses the two-dimension code to acquire information about the two-dimension code, where the information about the two-dimension code includes an access password of the access point and an identifier of the access point, and accesses the access point according to the access password of the access point and the identifier of the access point. A two-dimension code is automatically scanned or acquired without a need to use a keyboard to enter a password or synchronously click a WPS button, in which case the operation is convenient and simple and a size of a user terminal is reduced. In addition, occurrence of an error arising from entering a long password is avoided, thereby improving the efficiency in accessing an access point. Further, an encryption manner based on a two-dimension code is used to prevent a password from being stolen. In addition, a two-dimension code may be generated by an access point, in which case a password leak does not occur easily and a system is prevented from breakdown caused by an attack by an unauthorized user.

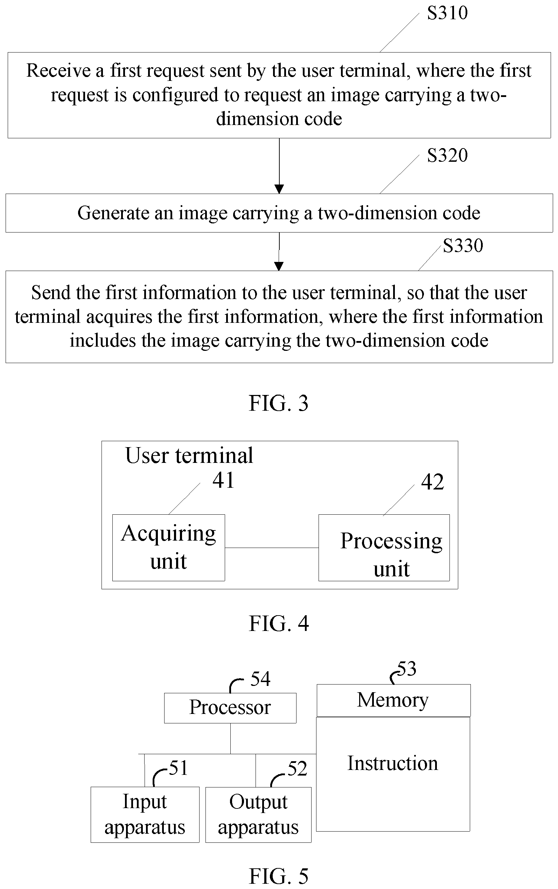

Referring to FIG. 3, FIG. 3 is a flowchart of another method for accessing an access point according to an embodiment of the present application. The method provided in this embodiment for accessing an access point is described based on that an access point is an executor. The method provided in this embodiment for accessing an access point includes:

Send an image carrying a two-dimension code to a user terminal, so that the user terminal acquires the image carrying the two-dimension code, the user terminal parses the image carrying the two-dimension code to acquire the two-dimension code, the user terminal parses the two-dimension code to acquire information about the two-dimension code, where the information about the two-dimension code includes an access password of the access point and an identifier of the access point, and accesses the access point according to the access password of the access point and the identifier of the access point.

In an embodiment, as shown in FIG. 3, the sending an image carrying a two-dimension code to a user terminal specifically includes the following steps:
S310. Receive a first request sent by the user terminal, where the first request is configured to request an image carrying a two-dimension code.
S320. Generate an image carrying a two-dimension code.

As an alternative implementation manner, after the receiving a first request sent by the user terminal and before sending first information to the user terminal, the method further includes:

Send payment request information to the user terminal, so that the user makes a payment according to the payment request information, where the payment request information includes a pricing standard and a charging mode and the first information further includes information about duration or traffic in accessing the access point.

S330. Send the first information to the user terminal, so that the user terminal acquires the first information, where the first information includes the image carrying the two-dimension code.

In an embodiment, the generating an image carrying a two-dimension code specifically includes the following steps:
Generate a two-dimension code; and
Encapsulate the two-dimension code into an image.

In an embodiment, the generating a two-dimension code specifically includes the following step:

Generate a two-dimension code according to an identifier of an access point, an access password of an access point, and an encryption manner.

According to this embodiment, an access point sends an image carrying a two-dimension code to a user terminal, so that the user terminal acquires the image carrying the two-dimension code, the user terminal parses the image carrying the two-dimension code to acquire the two-dimension code, the user terminal parses the two-dimension code to acquire information about the two-dimension code, where the information about the two-dimension code includes an access password of the access point and an identifier of the access point, and accesses the access point according to the access password of the access point and the identifier of the access point. A two-dimension code is automatically scanned or acquired without a need to use a keyboard to enter a password or synchronously click a WPS button, in which case the operation is convenient and simple and a size of a user terminal is reduced. In addition, occurrence of an error arising from entering a long password is avoided, thereby improving the efficiency in accessing an access point. Further, an encryption manner based on a two-dimension code is used to prevent a password from being stolen. In addition, a two-dimension code may be generated by an access point, in which case a password leak does not occur easily and a system is prevented from breakdown caused by an attack by an unauthorized user.

Referring to FIG. 4, FIG. 4 is a structural diagram of a user terminal according to an embodiment of the present application. As shown in FIG. 4, the user terminal provided in this embodiment includes: an acquiring unit 41 and a processing unit 42.

The acquiring unit 41 is configured to acquire a two-dimension code.

The processing unit 42 is configured to parse the two-dimension code to obtain information about the two-dimension code, where the information about the two-dimension code includes an access password of an access point and an identifier of the access point.

The processing unit 42 is further configured to access the access point according to the access password of the access point and the identifier of the access point.

As an alternative implementation manner, the acquiring unit is specifically configured to acquire the two-dimension code in a scanning manner.

As an alternative implementation manner, the acquiring unit is specifically configured to send a scanning request to the access point, so that the access point generates a two-dimension code and displays the two-dimension code on a screen, and is configured to scan the screen to acquire the two-dimension code.

As an alternative implementation manner, the acquiring unit is specifically configured to acquire an image carrying a two-dimension code, and is further configured to parse the image carrying the two-dimension code to acquire the two-dimension code.

As an alternative implementation manner, the acquiring unit is further configured to send a first request to the access point, so that the access point generates an image carrying a two-dimension code, where the first request is configured to request an image carrying a two-dimension code;
The acquiring unit is further configured to receive first information sent by the access point, where the first information includes an image carrying a two-dimension code.

As an alternative implementation manner, the acquiring unit is further configured to receive payment request information sent by the access point, so that the user, after making a payment according to the payment request information, receives first information sent by the access point, where the payment request information includes a pricing standard and a charging mode and the first information further includes information about duration or traffic in accessing the access point.

As an alternative implementation manner, the acquiring unit is further configured to scan a screen by using a camera.

As an alternative implementation manner, the information about the two-dimension code further includes information about duration or traffic in accessing the access point.

According to this embodiment, the acquiring unit 41 acquires a two-dimension code and the processing unit 42 parses the two-dimension code to acquire information about the two-dimension code, where the information about the two-dimension code includes an access password of an access point and an identifier of the access point. The processing unit 42 further accesses the access point according to the access password of the access point and the identifier of the access point. A two-dimension code is automatically scanned or acquired without a need to use a keyboard to enter a password or synchronously click a WPS button, in which case the operation is convenient and simple and a size of a user terminal is reduced. In addition, occurrence of an error arising from entering a long password is avoided, thereby improving the efficiency in accessing an access point. Further, an encryption manner based on a two-dimension code is used to prevent a password from being stolen. In addition, a two-dimension code may be generated by an access point, in which case a password leak does not occur easily and a system is prevented from breakdown caused by an attack by an unauthorized user.

Referring to FIG. 5, FIG. 5 is a structural diagram of another user terminal according to an embodiment of the present application. As shown in FIG. 5, the user terminal provided in this embodiment includes: an input apparatus 51, an output apparatus 52, a memory 53, and a processor 54, where the memory 53 stores a group of program code and the processor 54 calls the program code stored in the memory to perform the following operations:
Acquire a two-dimension code;
Parse the two-dimension code to acquire information about the two-dimension code, where the information about the two-dimension code includes an access password of an access point and an identifier of the access point; and
Access the access point according to the access password of the access point and the identifier of the access point.

According to the present application, the processor of the user terminal performs related operations, acquires a two-dimension code, parses the two-dimension code to acquire information about the two-dimension code, where the information about the two-dimension code includes an access password of an access point and an identifier of the access point, and accesses the access point according to the access password of the access point and the identifier of the access point. A two-dimension code is automatically scanned or acquired without a need to use a keyboard to enter a password or synchronously click a WPS button, in which case the operation is convenient and simple and a size of a user terminal is reduced. In addition, occurrence of an error arising from entering a long password is avoided, thereby improving the efficiency in accessing an access point.

Further, an encryption manner based on a two-dimension code may be used to prevent a password from being stolen. In addition, a two-dimension code may be generated by an access point, in which case a password leak does not occur easily and a system is prevented from breakdown caused by an attack by an unauthorized user.

As an alternative implementation manner, the acquiring a two-dimension code by the processor may be specifically implemented by acquiring a two-dimension code in a scanning manner.

As an alternative implementation manner, the acquiring a two-dimension code by the processor in a scanning manner may be specifically implemented by performing the following operations:
Send a scanning request to the access point, so that the access point generates a two-dimension code and displays the two-dimension code on a screen; and
Scan the screen to acquire the two-dimension code.

As an alternative implementation manner, the acquiring a two-dimension code by the processor may be specifically implemented by performing the following operations:
Acquire an image carrying a two-dimension code; and
Parse the image carrying the two-dimension code to acquire the two-dimension code.

As an alternative implementation manner, the acquiring an image carrying a two-dimension code by the processor may be specifically implemented by performing the following operations:
Send a first request to the access point, so that the access point generates an image carrying a two-dimension code, where the first request is configured to request an image carrying a two-dimension code; and
Receive first information sent by the access point, where the first information includes the image carrying the two-dimension code.

As an alternative implementation manner, after performing an operation of sending the first request to the access point and before performing an operation of receiving the first information sent by the access point, the processor is further configured to perform the following operation:

Receive payment request information sent by the access point, so that the user makes a payment according to the payment request information, where the payment request information includes a pricing standard and a charging mode and the first information further includes information about duration or traffic in accessing the access point.

As an alternative implementation manner, the scanning the screen by the processor is specifically implemented by performing the following operation:

Scan the screen by using a camera.

As an alternative implementation manner, the information about the two-dimension code further includes information about duration or traffic in accessing the access point.

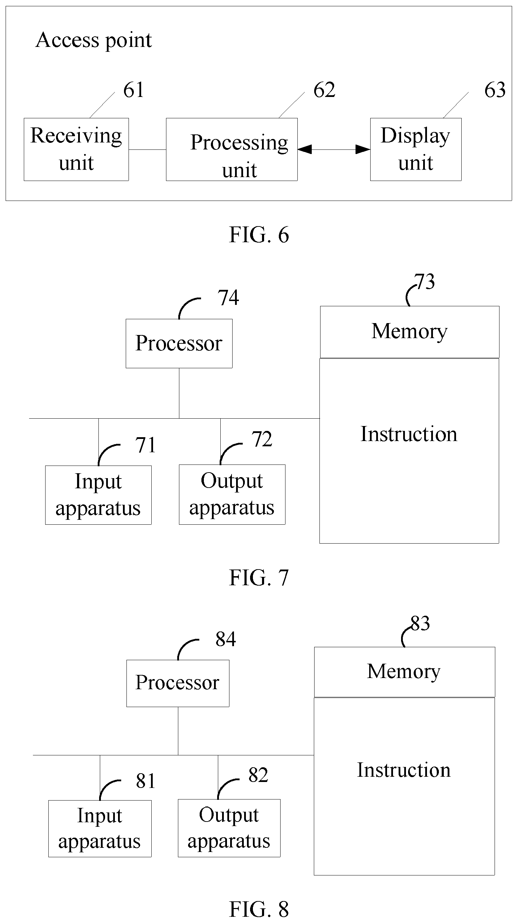

Referring to FIG. 6, FIG. 6 is a structural diagram of an access point according to an embodiment of the present application. As shown in FIG. 6, the access point provided in this embodiment includes: a receiving unit 61, a processing unit 62, and a display unit 63.

The receiving unit 61 is configured to receive a scanning request sent by a user terminal;
The processing unit 62 is configured to generate a two-dimension code according to the scanning request received by the receiving unit 61; and
The display unit 63 displays the two-dimension code on a screen, so that the user terminal scans the screen to acquire the two-dimension code, the user terminal parses the two-dimension code to acquire information about the two-dimension code, where the information about the two-dimension code includes an access password of the access point and an identifier of the access point, and the user terminal accesses the access point according to the access password of the access point and the identifier of the access point.

As an alternative implementation manner, the processing unit is specifically configured to generate a two-dimension code according to the identifier of the access point, the access password of the access point, and an encryption manner.

According to this embodiment, the receiving unit 61 receives a scanning request sent by the user terminal; the processing unit 62 generates a two-dimension code according to the scanning request received by the receiving unit 61; the display unit 63 displays the two-dimension code on a screen, so that the user terminal scans the screen to acquire the two-dimension code, the user terminal parses the two-dimension code to acquire information about the two-dimension code, where the information about the two-dimension code includes an access password of the access point and an identifier of the access point, and the user terminal accesses the access point according to the access password of the access point and the identifier of the access point. A two-dimension code is automatically scanned or acquired without a need to use a keyboard to enter a password or synchronously click a WPS button, in which case the operation is convenient and simple and a size of a user terminal is reduced. In addition, occurrence of an error arising from entering a long password is avoided, thereby improving the efficiency in accessing an access point.

Further, an encryption manner based on a two-dimension code is used to prevent a password from being stolen. In addition, a two-dimension code may be generated by an access point, in which case a password leak does not occur easily and a system is prevented from breakdown caused by an attack by an unauthorized user.

Referring to FIG. 7, FIG. 7 is a structural diagram of another access point according to an embodiment of the present application. As shown in FIG. 7, the access point provided in this embodiment includes: an input apparatus 71, an output apparatus 72, a memory 73, and a processor 74, where the memory 73 stores a group of program code and the processor 74 calls the program code stored in the memory to perform the following operations:
Receive a scanning request sent by a user terminal;
Generate a two-dimension code; and
Display the two-dimension code on a screen, so that the user terminal scans the screen to acquire the two-dimension code, the user terminal parses the two-dimension code to acquire information about the two-dimension code, where the information about the two-dimension code includes an access password of the access point and an identifier of the access point, and the user terminal accesses the access point according to the access password of the access point and the identifier of the access point.

As an alternative implementation manner, the generating a two-dimension code by the processor specifically includes the following step:

Generate a two-dimension code according to the identifier of the access point, the access password of the access point, and an encryption manner.

According to this embodiment, the processor performs related operations to receive a scanning request sent by a user terminal, generate a two-dimension code, and display the two-dimension code on a screen, so that the user terminal scans the screen to acquire the two-dimension code, the user terminal parses the two-dimension code to acquire information about the two-dimension code, where the information about the two-dimension code includes an access password of the access point and an identifier of the access point, and the user terminal accesses the access point according to the access password of the access point and the identifier of the access point. A two-dimension code is automatically scanned or acquired without a need to use a keyboard to enter a password or synchronously click a WPS button, in which case the operation is convenient and simple and a size of a user terminal is reduced. In addition, occurrence of an error arising from entering a long password is avoided, thereby improving the efficiency in accessing an access point.

Further, an encryption manner based on a two-dimension code is used to prevent a password from being stolen. In addition, a two-dimension code may be generated by an access point, in which case a password leak does not occur easily and a system is prevented from breakdown caused by an attack by an unauthorized user.

Another access point provided in this embodiment includes: a sending unit, configured to send an image carrying a two-dimension code to a user terminal, so that the user terminal acquires the image carrying the two-dimension code, the user terminal parses the image carrying the two-dimension code to acquire the two-dimension code, the user terminal parses the two-dimension code to acquire information about the two-dimension code, where the information about the two-dimension code includes an access password of the access point and an identifier of the access point, and the user terminal accesses the access point according to the access password of the access point and the identifier of the access point.

Alternatively, a sending unit is specifically configured to receive a first request sent by the user terminal, where the first request is configured to request an image carrying a two-dimension code, and is configured to generate an image carrying a two-dimension code according to the first request, and send first information to the user terminal, where the first information includes the image carrying the two-dimension code, so that the user terminal acquires the first information.

In an embodiment, the sending unit is further configured to send payment request information to the user terminal, so that a user makes a payment according to the payment request information, where the payment request information includes a pricing standard and a charging mode and the first information further includes information about duration or traffic in accessing the access point.

In an embodiment, the sending unit is further configured to generate a two-dimension code, and is configured to encapsulate the two-dimension code into an image.

In an embodiment, the sending unit is further configured to generate a two-dimension code according to the identifier of the access point, the access password of the access point, and an encryption manner.

Referring to FIG. 8, FIG. 8 is a structural diagram of another access point according to an embodiment of the present application. As shown in FIG. 8, the access point provided in this embodiment includes: an input apparatus 81, an output apparatus 82, a memory 83, and a processor 84, where the memory 83 stores a group of program code and the processor 84 calls the program code stored in the memory to perform the following operations:

Send an image carrying a two-dimension code to a user terminal, so that the user terminal acquires the image carrying the two-dimension code, the user terminal parses the image carrying the two-dimension code to acquire the two-dimension code, the user terminal parses the two-dimension code to acquire information about the two-dimension code, where the information about the two-dimension code includes an access password of the access point and an identifier of the access point, and the user terminal accesses the access point according to the access password of the access point and the identifier of the access point.

As an alternative implementation manner, the sending an image carrying a two-dimension code to a user terminal by the processor specifically includes the following steps:
Receive a first request sent by the user terminal, where the first request is configured to request an image carrying a two-dimension code;
Generate an image carrying a two-dimension code; and
Send first information to the user terminal, where the first information includes the image carrying the two-dimensional code, so that the user terminal acquires the first information.

As an alternative implementation manner, after performing an operation of receiving a first request sent by a user terminal and before performing an operation of sending first information to the user terminal, the processor is further configured to perform the following operation:

Send payment request information to the user terminal, so that the user makes a payment according to the payment request information, where the payment request information includes a pricing standard and a charging mode and the first information further includes information about duration or traffic in accessing the access point.

As an alternative implementation manner, the generating an image carrying a two-dimension code by the processor specifically includes the following steps:
Generate a two-dimension code; and
Encapsulate the two-dimension code into an image.

As an alternative implementation manner, the generating a two-dimension code by the processor specifically includes the following step:

Generate a two-dimension code according to the identifier of the access point, the access password of the access point, and an encryption manner.

According to this embodiment, a processor performs related operations to send an image carrying a two-dimension code to a user terminal, so that the user terminal acquires the image carrying the two-dimension code, the user terminal parses the image carrying the two-dimension code to acquire the two-dimension code, the user terminal parses the two-dimension code to acquire information about the two-dimension code, where the information about the two-dimension code includes an access password of the access point and an identifier of the access point, and the user terminal accesses the access point according to the access password of the access point and the identifier of the access point. A two-dimension code is automatically scanned or acquired without a need to use a keyboard to enter a password or synchronously click a WPS button, in which case the operation is convenient and simple and a size of a user terminal is reduced. In addition, occurrence of an error arising from entering a long password is avoided, thereby improving the efficiency in accessing an access point.

Further, an encryption manner based on a two-dimension code is used to prevent a password from being stolen. In addition, a two-dimension code may be generated by an access point, in which case a password leak does not occur easily and a system is prevented from breakdown caused by an attack by an unauthorized user.

In the several embodiments provided in the present application, it should be understood that the disclosed devices and methods may be implemented in other manners. For example, the foregoing device embodiments are merely exemplary. For example, the division of the modules or units is merely logical function division and may be another division in actual implementation. For example, a plurality of units or modules may be combined or integrated into another system, or some features may be ignored or not performed. In addition, the displayed or discussed mutual couplings, direct couplings, or communication connections may be implemented through some interfaces. The indirect couplings or communication connections between the apparatuses, modules or units may be implemented in electronic, mechanical, or other forms.

The modules or units described as separate parts may or may not be physical separate, and the parts displayed as modules or units may or may not be physical modules or units, may be located in one position, or may be distributed on a plurality of network modules or units. Some or all of the modules or units may be selected to achieve the objectives of the solutions of the embodiments of the present invention according to actual needs.

In addition, functional modules or units in embodiments of the present invention may be integrated into one processing module or unit, or each of the modules or units may exist alone physically, or two or more modules or units may be integrated into one module or unit. The integrated module or unit may be implemented through hardware, or may also be implemented in a form of a software functional unit.

When the integrated module or unit is implemented in a form of a software functional module or unit and sold or used as an independent product, the integrated module or unit may be stored in a computer-readable storage medium. Based on such an understanding, the technical solutions of the present invention essentially, the part contributing to the prior art, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in the embodiments of the present invention. The foregoing storage medium includes: any mediums that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of the present invention, but are not intended to limit the protection scope of the present invention. Any equivalent modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for accessing an access point, comprising:
acquiring (S110), by a user terminal, a two-dimension code by;
a) acquiring, by the user terminal in a scanning manner, the two-dimension code, comprising:
sending, by the user terminal, a scanning request to the access point, so that the access point generates a two-dimension code and displays the two-dimension code on a screen; and
scanning, by the user terminal, the screen to acquire the two-dimension code; or,
b) acquiring, by the user terminal, an image carrying a two-dimension code, comprising:
sending, by the user terminal, a first request to the access point, so that the access point generates an image carrying a two-dimension code, wherein the first request is configured to request an image carrying a two-dimension code;
receiving, by the user terminal, first information sent by the access point, wherein the first information comprises the image carrying the two-dimension code; and
parsing, by the user terminal, the image carrying the two-dimension code to acquire the two-dimension code;
parsing (S120), by the user terminal, the two-dimension code to obtain information about the two-dimension code, wherein the information about the two-dimension code comprises an access password of the access point and an identifier of the access point; and
accessing (S130), by the user terminal, the access point according to the access password of the access point and the identifier of the access point.

2. The method for accessing an access point according to claim 1, after the sending, by the user terminal, a first request to the access point and before the receiving, by the user terminal, first information sent by the access point, further comprising:
receiving, by the user terminal, payment request information sent by the access point, so that the user makes a payment according to the payment request information, wherein the payment request information comprises a pricing standard and a charging mode and the first information further comprises information about duration or traffic in accessing the access point.

3. The method for accessing an access point according to claim 1, wherein the information about the two-dimension code further comprises information about duration or traffic in accessing the access point.

4. A method for accessing an access point, the method comprising the steps of:
receiving (S210) a scanning request sent by a user terminal,
generating (S220) a two-dimension code, and
displaying (S230) the two-dimension code on a screen, so that the user terminal scans the screen to acquire the two-dimension code, the user terminal parses the two-dimension code to acquire information about the two-dimension code, wherein the information about the two-dimension code comprises an access password of the access point and an identifier of the access point, and the user terminal accesses the access point according to the access password of the access point and the identifier of the access point;
or the method comprising the steps of:
receiving (S310) a first request sent by the user terminal, wherein the first request is configured to request an image carrying a two-dimension code;
generating (S320) an image carrying the two-dimension code; and
sending (S330) first information to the user terminal, so that the user terminal acquires the first information, wherein the first information comprises the image carrying the two-dimension code;
so that the user terminal acquires the image carrying the two-dimension code, the user terminal parses the image carrying the two-dimension code to acquire the two-dimension code, the user terminal parses the two-dimension code to acquire information about the two-dimension code;
wherein the information about the two-dimension code comprises an access password of the access point and an identifier of the access point, and accesses the access point according to the access password of the access point and the identifier of the access point.

5. The method for accessing an access point according to claim 4, wherein the generating (S220) a two-dimension code comprises:
generating a two-dimension code according to the identifier of the access point, the access password of the access point, and an encryption manner.

6. The method for accessing an access point according to claim 4, after the receiving a first request sent by the user terminal and before the sending first information to the user terminal, further comprising:
sending payment request information to the user terminal, so that the user makes a payment according to the payment request information, wherein the payment request information comprises a pricing standard and a charging mode and the first information further comprises information about duration or traffic in accessing the access point.

7. The method for accessing an access point according to claim 4, wherein the generating an image carrying the two-dimension code comprises:
generating the two-dimension code; and
encapsulating the two-dimension code into an image;
wherein the generating the two-dimension code comprises:
generating the two-dimension code according to the identifier of the access point, the access password of the access point, and an encryption manner.

8. A user terminal, comprising:
an acquiring unit (41), configured to acquire a two-dimension code wherein:
a) the acquiring unit (41) is specifically configured to send a scanning request to an access point so that the access point generates a two-dimension code and displays the two-dimension code on a screen, and is configured to scan the screen to acquire the two-dimension code and to acquire the two-dimension code in a scanning manner; or,
b) the acquiring unit is specifically configured to send a first request to the access point so that the access point generates an image carrying a two-dimension code, wherein the first request is configured to request an image carrying a two-dimension code; the acquiring unit is further configured to receive first information sent by the access point, wherein the first information comprises the image carrying the two-dimension code, and acquire an image carrying a two-dimension code, and is further configured to parse the image carrying the two-dimension code to acquire the two-dimension code; and
a processing unit (42), configured to parse the two-dimension code to obtain information about the two-dimension code, wherein the information about the two-dimension code comprises an access password of an access point and an identifier of the access point; wherein:
the processing unit is further configured to access the access point according to the access password of the access point and the identifier of the access point.

## Patentansprüche

1. Verfahren zum Zugreifen auf einen Zugangspunkt, das die folgenden Schritte umfasst:
Erfassen (S110), durch ein Benutzergerät, eines zweidimensionalen Codes durch
a) Erfassen, durch das Benutzergerät durch Scannen, des zweidimensionalen Codes, umfassend: Senden, durch das Benutzergerät, einer Scananforderung an den Zugangspunkt, so dass der Zugangspunkt einen zweidimensionalen Code erzeugt und den zweidimensionalen Code auf einem Bildschirm anzeigt; und Scannen, durch das Benutzergerät, des Bildschirms, um den zweidimensionalen Code zu erfassen; oder
b) Erfassen, durch das Benutzergerät, eines Bildes, das einen zweidimensionalen Code führt, umfassend:
Senden, durch das Benutzergerät, einer ersten Anforderung an den Zugangspunkt, so dass der Zugangspunkt ein Bild erzeugt, das einen zweidimensionalen Code führt, wobei die erste Anforderung ausgelegt ist zum Anfordern eines Bildes, das einen zweidimensionalen Code führt;
Empfangen, durch das Benutzergerät, von ersten Informationen, die vom Zugangspunkt gesendet wurden, wobei die ersten Informationen das Bild umfassen, das den zweidimensionalen Code führt; und
Parsen, durch das Benutzergerät, des Bildes, das den zweidimensionalen Code führt, um den zweidimensionalen Code zu erfassen;
Parsen (S120), durch das Benutzergerät, des zweidimensionalen Codes, um Informationen über den zweidimensionalen Code zu erhalten, wobei die Informationen über den zweidimensionalen Code ein Zugangspasswort des Zugangspunkts und eine Kennung des Zugangspunkts umfassen; und
Zugreifen (S130), durch das Benutzergerät, auf den Zugangspunkt gemäß dem Zugangspasswort des Zugangspunkts und der Kennung des Zugangspunkts.

2. Verfahren zum Zugreifen auf einen Zugangspunkt nach Anspruch 1, wobei das Verfahren nach dem Senden, durch das Benutzergerät, einer ersten Anforderung an den Zugangspunkt und vor dem Empfangen, durch das Benutzergerät, von ersten Informationen, die vom Zugangspunkt gesendet wurden, ferner den folgenden Schritt umfasst:
Empfangen, durch das Benutzergerät, von Zahlungsanforderungsinformationen, die vom Zugangspunkt gesendet wurden, so dass der Benutzer gemäß den Zahlungsanforderungsinformationen eine Zahlung vornimmt, wobei die Zahlungsanforderungsinformationen einen Preisfestsetzungsstandard und einen Rechnungsstellungsmodus umfassen und die ersten Informationen ferner Informationen über Dauer oder Verkehr beim Zugreifen auf den Zugangspunkt umfassen.

3. Verfahren zum Zugreifen auf einen Zugangspunkt nach Anspruch 1, wobei die Informationen über den zweidimensionalen Code ferner Informationen über Dauer oder Verkehr beim Zugreifen auf den Zugangspunkt umfassen.

4. Verfahren zum Zugreifen auf einen Zugangspunkt, wobei das Verfahren die folgenden Schritte umfasst:
Empfangen (S210) einer Scananforderung, die von einem Benutzergerät gesendet wurde,
Erzeugen (S220) eines zweidimensionalen Codes;
Anzeigen (S230) des zweidimensionalen Codes auf einem Bildschirm, so dass das Benutzergerät den Bildschirm scannt, um den zweidimensionalen Code zu erfassen, das Benutzergerät den zweidimensionalen Code parst, um Informationen über den zweidimensionalen Code zu erhalten, wobei die Informationen über den zweidimensionalen Code ein Zugangspasswort des Zugangspunkts und eine Kennung des Zugangspunkts umfassen und das Benutzergerät auf den Zugangspunkt gemäß dem Zugangspasswort des Zugangspunkts und der Kennung des Zugangspunkts zugreift;
oder das Verfahren die folgenden Schritte umfasst:
Empfangen (S310) einer ersten Anforderung, die vom Benutzergerät gesendet wurde, wobei die erste Anforderung ausgelegt ist zum Anfordern eines Bildes, das einen zweidimensionalen Code führt;
Erzeugen (S320) eines Bildes, das den zweidimensionalen Code führt; und
Senden (S330) erster Informationen an das Benutzergerät, so dass das Benutzergerät die ersten Informationen erfasst, wobei die ersten Informationen das Bild umfassen, das den zweidimensionalen Code führt;
so dass das Benutzergerät das Bild erfasst, das den zweidimensionalen Code führt, das Benutzergerät das Bild, das den zweidimensionalen Code führt, parst, um den zweidimensionalen Code zu erfassen, das Benutzergerät den zweidimensionalen Code parst, um Informationen über den zweidimensionalen Code zu erhalten;
wobei die Informationen über den zweidimensionalen Code ein Zugangspasswort des Zugangspunkts und eine Kennung des Zugangspunkts umfassen und auf den Zugangspunkt gemäß dem Zugangspasswort des Zugangspunkts und der Kennung des Zugangspunkts zugreifen.

5. Verfahren zum Zugreifen auf einen Zugangspunkt nach Anspruch 4, wobei das Erzeugen (S220) eines zweidimensionalen Codes umfasst:
Erzeugen eines zweidimensionalen Codes gemäß der Kennung des Zugangspunkts, dem Zugangspasswort des Zugangspunkts und einer Verschlüsselungsart.

6. Verfahren zum Zugreifen auf einen Zugangspunkt nach Anspruch 4, wobei das Verfahren nach dem Empfangen einer ersten Anforderung, die vom Benutzergerät gesendet wurde, und vor dem Senden von ersten Informationen an das Benutzergerät ferner umfasst:
Senden von Zahlungsanforderungsinformationen an das Benutzergerät, so dass der Benutzer gemäß den Zahlungsanforderungsinformationen eine Zahlung vornimmt, wobei die Zahlungsanforderungsinformationen einen Preisfestsetzungsstandard und einen Rechnungsstellungsmodus umfassen und die ersten Informationen ferner Informationen über Dauer oder Verkehr beim Zugreifen auf den Zugangspunkt umfassen.

7. Verfahren zum Zugreifen auf einen Zugangspunkt nach Anspruch 4, wobei das Erzeugen eines Bildes, das den zweidimensionalen Code führt, die folgenden Schritte umfasst:
Erzeugen des zweidimensionalen Codes; und
Einkapseln des zweidimensionalen Codes in ein Bild;
wobei das Erzeugen des zweidimensionalen Codes den folgenden Schritt umfasst:
Erzeugen eines zweidimensionalen Codes gemäß der Kennung des Zugangspunkts, dem Zugangspasswort des Zugangspunkts und einer Verschlüsselungsart.

8. Benutzergerät, das Folgendes umfasst:
eine Erfassungseinheit (41), die ausgelegt ist zum Erfassen eines zweidimensionalen Codes, wobei:
a) die Erfassungseinheit (41) insbesondere ausgelegt ist zum Senden einer Scananforderung an einen Zugangspunkt, so dass der Zugangspunkt einen zweidimensionalen Code erzeugt und den zweidimensionalen Code auf einem Bildschirm anzeigt, und ausgelegt ist zum Scannen des Bildschirms, um den zweidimensionalen Code zu erfassen und zum Erfassen des zweidimensionalen Codes durch Scannen; oder
b) die Erfassungseinheit insbesondere ausgelegt ist zum Senden einer ersten Anforderung an den Zugangspunkt, so dass der Zugangspunkt ein Bild erzeugt, das einen zweidimensionalen Code führt, wobei die erste Anforderung ausgelegt ist zum Anfordern eines Bildes, das einen zweidimensionalen Code führt; die Erfassungseinheit ferner ausgelegt ist zum Empfangen von ersten Informationen, die vom Zugangspunkt gesendet wurden, wobei die ersten Informationen das Bild umfassen, das den zweidimensionalen Code führt, und zum Erfassen eines Bildes, das einen zweidimensionalen Code führt, und ferner ausgelegt ist zum Parsen des Bildes, das den zweidimensionalen Code führt, um den zweidimensionalen Code zu erfassen; und
eine Verarbeitungseinheit (42), die ausgelegt ist zum Parsen des zweidimensionalen Codes, um Informationen über den zweidimensionalen Code zu erhalten, wobei die Informationen über den zweidimensionalen Code ein Zugangspasswort des Zugangspunkts und eine Kennung des Zugangspunkts umfassen; wobei:
die Verarbeitungseinheit ferner ausgelegt ist zum Zugreifen auf den Zugangspunkt gemäß dem Zugangspasswort des Zugangspunkts und der Kennung des Zugangspunkts.

## Revendications

1. Procédé pour accéder à un point d'accès, comprenant les étapes suivantes :
acquérir (S110), par un terminal utilisateur, un code à deux dimensions en :
a) acquérant, par le terminal utilisateur, par balayage, le code à deux dimensions, ce qui comprend les étapes suivantes :
envoyer, par le terminal utilisateur, une demande de balayage au point d'accès, de manière à ce que le point d'accès génère un code à deux dimensions et affiche le code à deux dimensions sur un écran ; et
balayer, par le terminal utilisateur, l'écran pour acquérir le code à deux dimensions ; ou,
b) acquérant, par le terminal utilisateur, une image portant un code à deux dimensions, ce qui comprend les étapes suivantes :
envoyer, par le terminal utilisateur, une première demande au point d'accès, de manière à ce que le point d'accès génère une image portant un code à deux dimensions, où la première demande est configurée pour demander une image portant un code à deux dimensions ;
recevoir, par le terminal utilisateur, des premières informations envoyées par le point d'accès, où les premières informations comprennent l'image portant le code à deux dimensions ; et
analyser, par le terminal utilisateur, l'image portant le code à deux dimensions pour acquérir le code à deux dimensions ;
analyser (S120), par le terminal utilisateur, le code à deux dimensions pour obtenir des informations sur le code à deux dimensions, où les informations sur le code à deux dimensions comprennent un mot de passe d'accès du point d'accès et un identifiant du point d'accès ; et
accéder (S 130), par le terminal utilisateur, au point d'accès conformément au mot de passe du point d'accès et à l'identifiant du point d'accès.

2. Procédé pour accéder à un point d'accès selon la revendication 1, après l'envoi, par le terminal utilisateur, d'une première demande au point d'accès et avant la réception, par le terminal utilisateur, de premières informations envoyées par le point d'accès, comprenant en outre les étapes suivantes :
recevoir, par le terminal utilisateur, des informations de demande de paiement envoyées par le point d'accès, de manière à ce que l'utilisateur effectue un paiement conformément aux informations de demande de paiement, où les informations de demande de paiement comprennent une tarification et un mode de taxation, et les premières informations comprennent en outre des informations sur la durée ou le trafic pour accéder au point d'accès.

3. Procédé pour accéder à un point d'accès selon la revendication 1, dans lequel les informations sur le code à deux dimensions comprennent en outre des informations sur la durée ou le trafic pour accéder au point d'accès.

4. Procédé pour accéder à un point d'accès, le procédé comprenant les étapes suivantes :
recevoir (S210) une demande de balayage envoyée par un terminal utilisateur, générer (S220) un code à deux dimensions, et
afficher (S230) le code à deux dimensions sur un écran, de manière à ce que le terminal utilisateur balaye l'écran pour acquérir le code à deux dimensions, le terminal utilisateur analyse le code à deux dimensions pour acquérir des informations sur le code à deux dimensions, où les informations sur le code à deux dimensions comprennent un mot de passe d'accès du point d'accès et un identifiant du point d'accès, et le terminal utilisateur accède au point d'accès conformément au mot de passe d'accès du point d'accès et à l'identifiant du point d'accès ;
ou le procédé comprenant les étapes suivantes :
recevoir (S310) une première demande envoyée par le terminal utilisateur, où la première demande est configurée pour demander une image portant un code à deux dimensions ;
générer (S320) une image portant le code à deux dimensions ; et
envoyer (S330) des premières informations au terminal utilisateur, de manière à ce que le terminal utilisateur acquiert les premières informations, où les premières informations comprennent l'image portant le code à deux dimensions ;
de manière à ce que le terminal utilisateur acquiert l'image portant le code à deux dimensions, le terminal utilisateur analyse l'image portant le code à deux dimensions pour acquérir le code à deux dimensions, le terminal utilisateur analyse le code à deux dimensions pour acquérir des informations sur le code à deux dimensions ; où
les informations sur le code à deux dimensions comprennent un mot de passe d'accès du point d'accès et un identifiant du point d'accès, et accède au point d'accès conformément au mot de passe d'accès du point d'accès et à l'identifiant du point d'accès.

5. Procédé pour accéder à un point d'accès selon la revendication 4, dans lequel la génération (S220) d'un code à deux dimensions comprend l'étape suivante :
générer un code à deux dimensions conformément à l'identifiant du point d'accès, au mot de passe d'accès du point d'accès et à un type de chiffrement.

6. Procédé pour accéder à un point d'accès selon la revendication 4, après réception d'une première demande envoyée par le terminal utilisateur et avant l'envoi de premières informations au terminal utilisateur, comprenant en outre l'étape suivante : envoyer des informations de demande de paiement au terminal utilisateur, de manière à ce que l'utilisateur effectue un paiement conformément aux informations de demande de paiement, où les informations de demande de paiement comprennent une tarification et un mode de taxation et les premières informations comprennent en outre des informations sur la durée ou le trafic pour accéder au point d'accès.

7. Procédé pour accéder à un point d'accès selon la revendication 4, dans lequel la génération d'une image portant le code à deux dimensions comprend les étapes suivantes :
générer le code à deux dimensions ; et
encapsuler le code à deux dimensions dans une image ;
où la génération du code à deux dimensions comprend l'étape suivante :
générer le code à deux dimensions conformément à l'identifiant du point d'accès, au mot de passe d'accès du point d'accès et à un type de chiffrement.

8. Terminal utilisateur, comprenant :
une unité d'acquisition (41), configurée pour acquérir un code à deux dimensions où :
a) l'unité d'acquisition (41) est spécifiquement configurée pour envoyer une demande de balayage à un point d'accès de manière à ce que le point d'accès génère un code à deux dimensions et affiche le code à deux dimensions sur un écran, et est configurée pour balayer l'écran pour acquérir le code à deux dimensions et pour acquérir le code à deux dimensions par balayage ; ou,
b) l'unité d'acquisition est spécifiquement configurée pour envoyer une première demande au point d'accès de manière à ce que le point d'accès génère une image portant un code à deux dimensions, où la première demande est configurée pour demander une image portant un code à deux dimensions ; la première unité d'acquisition est en outre configurée pour recevoir des premières informations envoyées par le point d'accès, où les premières informations comprennent l'image portant le code à deux dimensions, et acquérir une image portant un code à deux dimensions, et est en outre configurée pour analyser l'image portant le code à deux dimensions pour acquérir le code à deux dimensions ; et
une unité de traitement (42), configurée pour analyser le code à deux dimensions pour obtenir des informations sur le code à deux dimensions, où les informations concernant le code à deux dimensions comprennent un mot de passe d'accès d'un point d'accès et un identifiant du point d'accès ; où :
l'unité de traitement est en outre configurée pour accéder au point d'accès conformément au mot de passe d'accès du point d'accès et à l'identifiant du point d'accès.
